# EUROPEAN PATENT APPLICATION

(11) **EP 4 424 913 A1**
(43) Date of publication of application: **04.09.2024**
(21) Application number: 23159516.6
(22) Date of filing: 01.03.2023
(51) Int. Cl.: E01C 11/24, E01C 3/06, C04B 28/02, C04B 26/26, E01C 11/26, E01C 7/14

(54) **NANOREINFORCED CONCRETE FOR PAVEMENT DEICING**

(71) Applicant: Alexandros SA, 67100 Xanthi (GR)
(72) Inventor: Ekmektsis, Athanasios, 67100 Xanthi (GR); Christodoulou, Effrosyni, 67100 Xanthi (GR)

(57) **Abstract**

Ordinary concrete, used for pavement construction, is modified by adding carbon based nanomaterials. These nanomaterials are homogeneously dispersed into the mixing water, used to prepare the modified concrete, by introducing air-bulk nanobubbles. During concrete pavement casting the typical steel-mesh reinforcement is connected to a 230V AC power system; in this way, the mesh acts as an electrode. By passing electric current through the modified concrete, the temperature of the pavement increases when deicing is needed.

## Description

### State-of-the-art

The presence of ice and snow on the road surface is responsible for ~10-15% of road/pavement accidents [1]. Conventional approaches use sodium chloride as the most cost-effective anti-icing product [2]. However, its use may affect the durability of the road or pavement, as it can degrade its surface and contribute to the corrosion of the embedded steel reinforcement.

The application of de-icing salts and other chemicals combined with mechanical removal of the ice layer has been widely used. At first glance, this method is rather cheap, easy to implement and effective. However, the degradation of the pavement, the corrosion of the steel bars and the pollution of the soil and the underground water [3] that may be caused, can raise significant environmental and socio-economical issues [4, 5]. To overcome the disadvantages of de-icing with salts and application of mechanical energy other techniques, such as the implementation of super-hydrophobic coatings on the surfaces of the pavements [6], or the use of microwaves [7] for deicing have been proposed. However, those approaches have showed limited success [8] and new methods are required to be invented.

To this end, alternative strategies, utilizing heating of the pavement to elevate the roadway surface temperature and melt the layer of snow or ice, have been employed. Typically, these heating systems are embedded to the pavement utilizing resistive electrical heaters [9], ribbons [10] and heating pipes [11, 12, 13]. The aforementioned heating systems have been associated with several drawbacks, for instance, the increased costs of electrical energy that is required to preserve a certain temperature on the road surface capable to melt the ice and the large areas that are needed for the machinery installations.

Another approach is the electrically conductive concrete roads, that utilize the Joule heating effect, where the passage of electric current though a conductor produces heat. The concept was firstly introduced by the National Research Council of Canada in 1995. Initially, the studies used steel fibres to achieve electrical conductivity in concrete [14]. Nevertheless, steel fibres were associated with various challenging issues such inconsistency in size and source of fibres, oil contamination and low workability of the concrete composites. Carbon fibres and graphite products have been applied as alternatives to the steel fibres without however, solving the increased construction cost [15, 16, 17, 18].

### Description of the invention application

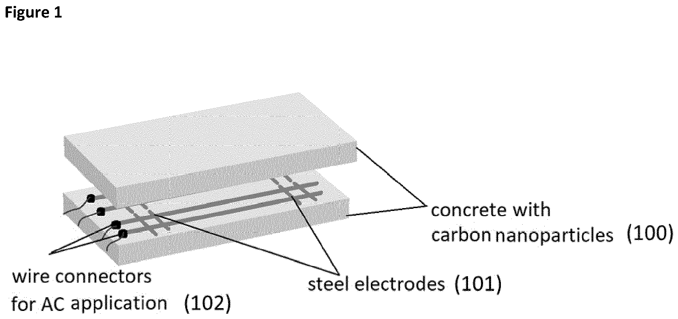

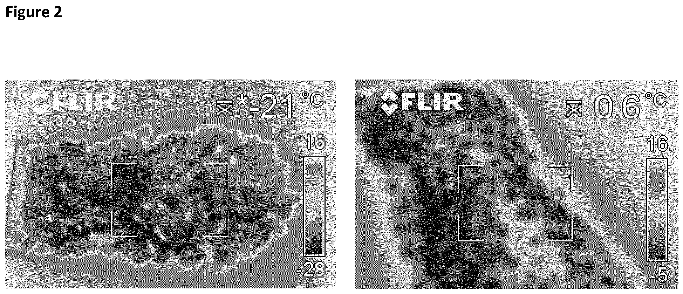

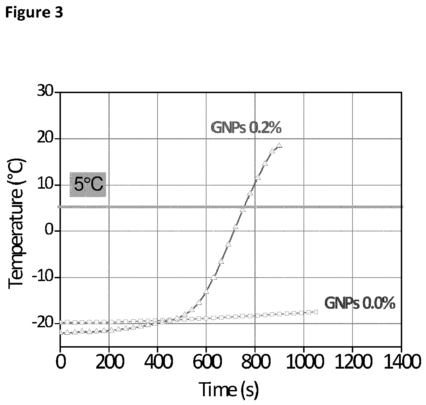

Fig. 1 shows the invention. The pavement (100) modified with carbon nanomaterials (such as carbon nanotubes or graphene nanoplates (GNPs)) reinforced with embedded wire steel-mesh acting as electrodes (101) is connected to a power system (102). Fig. 2. Illustrates the temperature over time of concrete with and without GNPs. By applying electrical current, the temperature of the pavement increases whenever de-icing is required. Fig.3 a and b, illustrates thermal images of the nanoreinforced concrete during the deicing process; left image is taken on time 0 and right image after 45 min.

### Detailed description of the invention

Our invention solves all the aforementioned problems because is based on the use of conductive reinforcement that involves graphene nanoplatelets at very low concentrations (up to 0.2 wt% of cement) produced from low cost raw materials (such as agricultural waste). Homogeneous dispersion of the nanomaterials is achieved with water enhanced with air nanobubbles [19]. Typical wire steel-mesh used as an integral concrete structure component to improve the lateral strength of concrete slabs also acts as electrode applying AC power at a voltage of 230.

The invention relates to methods for producing a smart concrete nanoreinforced with carbon nanomaterials which can be used as a structural material and as an anti-icing agent, for the early prevention of ice formation. The invention can be practiced to prepare nanoreinforced concrete pavement for de-icing applications. The graphene nanoplateles can be produced from food waste, or any other cheap material such as lignite, but no limited to commercially available nanomaterials.

Carbon nanomaterials (CBNs), such as carbon nanotubes (CNTs) and graphene nanoplatelets (GNPs) typically exhibit high electrical and thermal conductivity, and provide the cementitious matrix with the ability to carry electricity. The electrically conductive carbon nanomaterials develop several electrical current pathways inside the concrete matrix. As a result, when electric voltage passes through the nanocomposite the temperature increases rapidly melting or preventing ice and snow build up. The developed nanoreinforced concrete, upon ice formation, heats itself by applying an electrical voltage to an electrode system embedded in the concrete matrix. This invention provides functions, which are important for the public safety, such as real-time de-icing of concrete-exclusive pavements, roads, airport runways, etc.

To improve their reinforcing ability, CBNs need to be uniformly dispersed within the matrix. Nanoparticles mixed with water demonstrate a tendency to agglomerate due to van der Waals forces and their hydrophobic nature. Poor dispersion of CBNs leads to the formation of many defect sites in the nanocomposite and limits their efficiency in the matrix. To achieve CBNs uniform distribution the present invention utilizes water that was treated using air-bulk nanobubbles generated by 19.

Ordinary Portland cement, GNPs originating from agri-food waste (orange peel) and aggregates (0-16 mm) are used to fabricate the nanoreiforced concrete for pavement deicing. GNPs are incorporated into the concrete matrix, at a content of 0.2% by weight of cement. For the sufficient dispersion of GNPs in the nanocomposite, tap water with air nanobubbles (NBs) is used.

The nanoreiforced concrete for pavement deicing is cast with an embedded steel electrode system. The embedded steel electrode system is used for the application of alternate current.

### Definitions

Carbon based nanomaterials [20] are materials based on the allotropic phases of carbon (i.e. CNTs, Graphite, Graphene, fullerene etc) with the one of their dimension is up to 100nm.

Air-bulk nanobubbles [21] are cavities, less in 1µm in diameter, of air dispersed into water bulk phase.

Steel-mesh reinforcement [22] is a premade structure consisting of a series of wired open squares made of steel bars and is used as an integral concrete structure component to improve the lateral strength of concrete slabs.

Nano reinforced concrete [23] is a form of concrete that contains nanoparticles.

### References

1. Wu, J., Liu, J., and Yang, F., Three-phase composite conductive concrete for pavement deicing. Construction and Building Materials, 2015. 75: pp. 129-135.
2. Gerald J. Grott, METHODS FOR DEICING ROADS, US 8,210,768 B2, Jul. 3, 2012.
3. D. D. Williams, N. E. Williams and Y. Cao, Road salt contamination of groundwater in a major metropolitan area and development of a biological index to monitor its impact, Water Research, 34 (2000) 127-138.
4. T. R. Menzie, National cost of damage to infrastructure from highway deicing, in: V. Chaker (Eds.), Corrosion Forms and Control for Infrastructure, American Society for Testing and Materials, Philadelphia, 1991, pp. 30-46.
5. D. F. Vitaliano, An Economic Assessment of the Social Costs of Highway Salting and the Efficiency of Substituting a New Deicing Material, Journal of Policy Analysis and Management, 11 (1992) 397-418.
6. A. Arabzadeh, H. Ceylan, S. Kim, K. Gopalakrishnan and A. Sassani, Superhydrophobic Coatings on Asphalt Concrete Surfaces: Toward Smart Solutions for Winter Pavement Maintenance, Transportation Research Record, 2551 (2016) 10-17.
7. S. Lu, J. Xu, E. Bai, J. Liu and X. Luo, Investigating microwave deicing efficiency in concrete pavement, RSC Advances, 7 (2017) 9152-9159.
8. S. A. Yehia and C. Y. Tuan, Thin Conductive Concrete Overlay for Bridge Deck Deicing and Anti-Icing, Transportation Research Record, 1698 (2000) 45-53.
9. R. Lee, J. Sackos, J. Nydahl and K. Pell, Bridge Heating Using Ground-Source Heat Pipe, Transportation Research Record, No. 962, (1984) 51-57.
10. E. Levenberg and Q. Félix Adam, Construction of an Electrically Heated Asphalt Road Based on Ribbon Technology, Transportation Research Record, 2675 (2021) 652-663.
11. H. Wang, J. Zhao and Z. Chen, Experimental investigation of ice and snow melting process on pavement utilizing geothermal tail water, Energy Conversion and Management, 49 (2008) 1538-1546.
12. O. Tanaka, H. Yamakage, T. Ogushi, M. Murakami and Y. Tanaka, Snow Melting Using Heat Pipes, in: D. A. Reay (Eds.), Advances in Heat Pipe Technology, Pergamon, 1982, pp. 11-23.
13. X. Liu, S. J. Rees and J. D. Spitler, Modeling snow melting on heated pavement surfaces. Part II: Experimental validation, Applied Thermal Engineering, 27 (2007) 1125-1131.
14. S. Yehia, C. Y. Tuan, D. Ferdon and B. Chen, Conductive Concrete Overlay for Bridge Deck Deicing: Mixture Proportioning, Optimization, and Properties, ACI Materials Journal, 97, (2000) 172-181.
15. A. Sassani, A. Arabzadeh, H. Ceylan, S. Kim, S. M. S. Sadati, K. Gopalakrishnan, P. C. Taylor and H. Abdualla, Carbon fiber-based electrically conductive concrete for salt-free deicing of pavements, Journal of Cleaner Production, 203 (2018) 799-809.
16. G. Faneca, T. Ikumi, J. M. Torrents, A. Aguado and I. Segura, Conductive concrete made from recycled carbon fibres for self-heating and de-icing applications in urban furniture, Materiales de Construcción, 70 (2020) e223.
17. Z. Q. Tang, Z. Q. Li, J. S. Qian and K. J. Wang, Experimental study on deicing performance of carbon fiber reinforced conductive concrete, Journal of Materials Science & Technology, (2005) 113-117.
18. C. Chang, M. Ho, G. Song, Y.-L. Mo and H. Li, A feasibility study of self-heating concrete utilizing carbon nanofiber heating elements, Smart Materials and Structures, 18 (2009) 127001.
19. A.C. Mitropoulos and G. Bomis, European Patent 2995369A1, 2016.
20. Nikita Rao, Rasmeet Singh, Lavisha Bashambu, Carbon-based nanomaterials: Synthesis and prospective applications, Materials Today: Proceedings, 44, 2021, 608-614, https://doi.org/10.1016/j.matpr.2020.10.593.
21. Elisavet D. Michailidi, George Bomis, Athanasios Varoutoglou, George Z. Kyzas, George Mitrikas, Eleni K. Efthimiadou, Athanasios Ch. Mitropoulos, Evangelos P. Favvas, "Bulk nanobubbles: Production and investigation of their formation/stability mechanism", J. Colloid Interface Sci., 564, 2020, 371-380.
22. Georgi Oroschakoff, MESH REINFORCEMENT FOR REINFORCED CONCRETE STRUCTURES, US 3,522,685 Patented Aug. 4, 1970.
23. M.S. Muhd Norhasri, M.S. Hamidah, A. Mohd Fadzil, Applications of using nano material in concrete: A review, Constr. Building Mater., 133, 2017, 91-97, https://doi.org/10.1016/j.conbuildmat.2016.12.005.

## Claims

1. A method for modifying concrete suitable for pavement deicing.

2. Concrete of claim 1 reinforced with steel mesh that when connected to a 230V power supply acts as electrode.

3. Concrete of claim 1 that contains low cost carbon nanomaterials produced from agricultural waste or any other cheap raw materials.

4. Nanomaterials of claim 2 comprising graphene nanoplatelets that are present at an amount of 0.2 % or less by weight of cement.

5. Concrete of claim 1 with nanomaterials of claim 2 that provides real-time de-icing monitoring of pavements, roads, highways and airport runways for the benefit of social safety.
